# EUROPEAN PATENT APPLICATION

(11) **EP 1 933 192 A2**
(43) Date of publication of application: **18.06.2008**
(21) Application number: 07076018.6
(22) Date of filing: 27.11.2007
(51) Int. Cl.: G02F 1/1335

(54) **A method to provide a display panel**

(30) Priority: 27.11.2006 GB 0623611
(71) Applicant: Barco NV, 8500 Kortrijk (BE); Ninix Technologies NV, 8000 Brugge (BE)
(72) Inventor: Maenhout, Koenraad, B-8500 Kortrijk (BE); Crevitz, Domien, B-8810 Lichtervelde (BE); Degry, Patrick, B-8520 Kuurne (BE); Haspeslagh, Harold, B-8000 Brugge (BE); Ays, Yves, B-8000 Brugge (BE)
(74) Representative: Bird, Ariane

(57) **Abstract**

A method to provide a display panel according to the present invention comprises the step of providing at least one pixel element for producing or controlling light wherein the pixel element has a light emitting or reflecting surface and is mounted on a support. The method furthermore comprises covering the light emitting or reflecting surfaces of the at least one light emitting or reflecting element and at least a part of the support with substantially transparent material, thereby providing the optical surface of the display panel, which optical surface comprises at least one pixel element zone and at least one support zone. Furthermore, the method comprises modifying the roughness of the substantially transparent material of the optical surface along the support zone of the optical surface and/or along the pixel element zone of the optical surface, for rendering the substantially transparent material of the optical surface along the support zone of the optical surface being more rough than along the pixel element zone of the optical surface

## Description

### Technical field of the invention

The present invention relates to display panels, such as fixed format display panels like for example electroluminescent (EL) panels, light emitting devce (LED) panels or liquid crystal display (LCD) panels or lighting devices and to a method to provide a display panel, such as EL panels, LED panels ,LCD panels or lighting devices.

### Background of the invention

Fixed format display panels known in the art comprise usually an array of pixel elements for producing or controlling light and/or video over a small area, such as e.g. LED elements, OLED elements, inorganic EL-pixel elements, LCD's, E-ink and any other suitable pixel element as used in LED-displays, OLED displays, LCD displays, plasma displays, field emission displays, EL-displays, digital mirror devices, LCOS devices, lighting devices and alike. The pixel elements have a light-emitting surface. The pixel elements may be reflective, transmissive or emissive, for example. The display panels e.g. LED-displays, OLED displays, LCD displays, plasma displays, field emission displays, EL-displays, digital mirror devices LCOS devices, or lighting devices and alike further comprise a support for supporting the pixel elements.

Especially in case display panels are to be used outdoors, hence needing to be waterproof, they may comprise substantially transparent potting material, covering the light emitting or reflecting surfaces of the pixel elements and at least a part of the support. The potting material provides the optical surface of the display panel through which the image created by the pixel elements is putted out, i.e. made visible.

Though the potting material may comprise a colour pigment providing a colour to the light emitted through the optical surface, the potting material is to be as transparent as possible in order to reduce the light intensity of the emitted light of the pixel element as little as possible. A disadvantage however is that the higher the light transparency of the potting material, the higher the light reflectivity of the potting material, e.g. the reflectivity for the ambient light, e.g. solar light, at its surface. Due to this reflection, the image created by the pixel elements may become disturbed, i.e. unclear. This is especially the case when images with low intensity are displayed or images with small intensity differences between adjacent pixel elements are to be made visible.

### Summary of the invention

It is an object of the present invention to provide display panels, which optionally may be used as outdoor display panels or parts of outdoor displays, and which show less reflection of ambient light. It is an advantage of embodiments of the present invention that methods and systems are provided that allow creation of clear images under different angles of incident of the ambient light, even for images having a low intensity difference between adjacent pixels. It is also an object of the present invention to provide a method to provide or manufacture display panels having these advantages. Embodiments according to the present invention to provide accurate and precise manufacturing methods without the need for complex and/or labor intensive process steps.

The above objective is accomplished by a method and display panel according to the present invention.

According to a first aspect of the present invention, a method to provide a display panel having an optical surface comprises the steps of
• providing at least one pixel element for producing or controlling light, the pixel element having a light emitting or reflecting surface, the pixel element being mounted in or on a support;
• covering the light emitting or reflecting surfaces of the at least one light emitting or reflecting element and at least a part of the support with substantially transparent or translucent material thereby providing an optical surface of the display panel, which optical surface comprises at least one pixel element zone and at least one support zone, wherein a pixel element zone is a part of the optical surface bound by the projection of a light emitting or reflecting surface of a pixel element onto the optical surface in a direction perpendicular to the optical surface and wherein a support zone is a part of the optical surface bound by the projection of the support onto the optical surface in a direction perpendicular to the optical surface;
• modifying the roughness of the substantially transparent or translucent material of the optical surface along the support zone of the optical surface and/or modifying the roughness of the substantially transparent or translucent material of the optical surface along the pixel element zone of the optical surface, for rendering the substantially transparent or translucent material of the optical surface along the support zone of the optical surface being more rough than the substantially transparent or translucent material of the optical surface along the pixel element zone of the optical surface.

The at least one pixel element for producing or controlling light may be at least one pixel element for producing or controlling light for lighting or showing video. The light emitting or reflecting element may be a light emitting element and the light emitting or reflecting surface may be a light emitting surface.

According to embodiments of the present invention, the step of modifying the roughness of the substantially transparent or translucent material of the optical surface along the support zone of the optical surface and/or modifying the roughness of the substantially transparent or translucent material of the optical surface along the pixel element zone of the optical surface comprises the step of roughening of the substantially transparent or translucent material of the optical surface along the support zone of the optical surface.

The support may be a printed circuit board (PCB board) to which the pixel elements can be coupled.

Embodiments of the present invention have the advantage that, due to the roughened surface provided at the support zones, i.e. at the zones of the optical surface under which no light emitting or reflecting surface of a pixel element is present, the reflectivity of the optical surface is reduced. In the zone of the optical surface under which a light emitting or reflecting surface of a pixel element is present, the reflectivity of the optical surface is not changed, hence the optical transmissivity of the substantially transparent or translucent material, e.g. potting material, remains unchanged as well. It has been found that by roughening the support zones of the optical surface, while leaving the pixel element zones unchanged, the display panel shows less image disturbance and/or loss of image sharpness. It is believed this is due to the reduction of the reflection of high reflectivity of ambient light, e.g. solar light, at its surface. Especially when images with low intensity or images with small intensity differences between adjacent pixel elements are to be made visible, the roughening of the support zones has the advantage that less image disturbance and/or loss of image sharpness due to the reduced reflection is obtained.

The method enables the use of substantially transparent or translucent materials, e.g. potting materials having relatively high optical transmissivity, in order to avoid reduction of the light intensity of the emitted light of the pixel element passing through the substantially transparent or translucent materials, e.g. potting material, whereas the method solves at least partially the disadvantage of high reflectivity of these materials having high optical transmissivity.

As the method does not add additional material to the optical surface, but changes locally the reflective properties of the substantially transparent or translucent materials, e.g. potting material, at the optical surface, the display panel has a low risk on loosing its properties over time due to weather conditions and/or environmental conditions.

The display panel may be provided in different dimensions and shapes, and the method benefits of having substantial no dimensional restrictions.

The display panel may comprise a multitude of frame parts, each frame part being provided with a support for supporting one but usually more than one pixel element such as LEDs, OLEDs or LCD's, E-ink pixels, possibly all aligned. The different frame parts may be coupled to each other along one or more coupling elements of the frame.

Alternatively the support may have a substantially rectangular, oval, circular or other geometrical shape, on which a multitude of pixel elements are arranged, possibly according to a pixel element array.

The substantially transparent or translucent material can be a potting material. Any suitable potting material may be used. Optionally the potting material is a material out of the group of polyurethane polymers, silicone-based materials, epoxy resin and acrylate polymers.

The substantially transparent or translucent material may be a substantially transparent or translucent foil or plate, such as e.g. a substantially transparent or translucent polycarbonate or acrylate foil or plate. The substantially transparent or translucent material may be any suitable material for providing a layer that is substantially transparent or translucent, e.g. by means of potting, hot-melting, spraying lacquering or gluing. Substantially transparent or translucent materials may be substantially transparent or translucent thermo-hardening material, polypropylene, polyethylene, polycarbonate PMMA or suitable acrylates.

The transparent or translucent material, e.g. in the form of a potting material, is applied to the light emitting or reflecting surfaces of the at least one light emitting or reflecting element and to at least a part of the support, for covering the light emitting or reflecting surfaces of the display panel at the at least one light emitting or reflecting element and at least a part of the support in any suitable way. The transparent or translucent material, e.g. in the form of a potting material, provides the optical surface of the display panel, which surface can be substantially flat, i.e. having a relatively smooth or even surface. The transparent or translucent material, e.g. in the form of a potting material may be provided at each point of the display panel where it is present in such a way that it has a substantially uniform thickness over the optical surface. In this way the surface of the transparent or translucent material, may not necessarily be substantially flat, but the pixel element zones will extend beyond the support zones.

According to embodiments of the method, the at least one pixel element may be at least one LED. Additionally or alternatively, some or all pixel element may be LED and OLED elements, EL elements, E-ink pixel elements etc. such as used in plasma displays, field emission displays, EL-displays, LCD's illumination such as outdoor illumination, etc.

According to embodiments of the method, the roughening may be done by removing a part of the substantially transparent or translucent materials, e.g. potting material, at the optical surface along the support zone thereby providing a regular or irregular surface pattern at the optical surface along the support zone.

According to embodiments of the method, the pattern may be a regular pattern, such as substantially parallel lines, or two sets of substantially parallel lines, mutually crossing each other and forming a textile-like, woven pattern.

The advantage of the provision of a regular pattern is that it allows to adjust the reflectivity of the substantially transparent or translucent materials, e.g. potting material, at the support zones in function of the angle of incidence of the incident ambient light.

According to embodiments of the method, removing a part of the substantially transparent or translucent materials, e.g. potting material, at the optical surface along the support zone may be done by irradiating the substantially transparent or translucent materials, e.g. potting material, at the optical surface along the support zone with a laser. The irradiation will cause the irradiated substantially transparent or translucent materials, e.g. irradiated potting material, to become partially destroyed and removed. In particular laser surface processing may be used. Laser processing has the advantage that the surface may be etched while not thermally degrading the material underneath. Laser techniques for modifying the surface include laser ablation and/or laser etching.

Using a laser to remove substantially transparent or translucent materials, e.g. potting material, is also advantageous as in such a way a pattern, be it a regular or irregular pattern, may be provided in a very accurate and precise and relatively easy way. The process step may be automated e.g. computer controlled. The method allows also the precise location of the zones to be roughened and the zones which are to be left unaffected, i.e. the pixel element zones.

The use of a laser does not create a substantial amount of particles in spite of the removal of particulate matter of the substantially transparent or translucent materials, e.g. potting material, at the optical surface due to evaporation and/or thermal degradation. By selection of the laser, wavelength of light used, and setting the laser processing parameters such as the use of continuous or pulsed laser light, the laser fluence etc., the etch depth and also the conversion of polymer molecules into gaseous products such as CO₂, CO, H₂O etc. can be controlled. Hence no negative influence of the products used or created during the process needs to be taken into account during roughening. The methods can be automated and made highly efficient and have substantially no dimensional limitations. If necessary, also additional parts of the display panel, such as sides of the frame holding the support, the pixel elements and the substantially transparent or translucent materials, e.g. the potting material may be roughened by using laser irradiation, providing a uniform roughened surface, possibly patterned, all along the outer surface of the display panel. These frames, or alternatively frame parts mounted together to form a frame, may be provided from polymer, metal such as aluminium or any other suitable material. The frame or frame parts are optionally provided with a dark colour, usually black.

The substantially transparent or translucent materials, e.g. potting material may be provided to the light emitting or reflecting surfaces of the at least one light emitting or reflecting element and at least a part of the support, for covering the light emitting or reflecting surfaces of the at least one light emitting or reflecting element and at least a part of the support, after the support and the pixel elements are mount in the frame or in a frame part. Alternatively, the substantially transparent or translucent materials, especially in case of use of potting material, the substantially transparent or translucent materials, may be provided to the light emitting or reflecting surfaces of the at least one light emitting or reflecting element and at least a part of the support, prior to mounting the support and the pixel elements into the frame or into the frame part. Similarly, the roughening zones of the substantially transparent or translucent materials, which roughened zones providing the optical surface along the support zones, may be done prior or after mounting the support, pixel elements and substantially or translucent transparent materials, in the frame or frame part. Similarly, the roughening zones of the substantially transparent or translucent materials, e.g. potting material, which roughened zones providing the optical surface along the support zones, may be done prior or after mounting the support and pixel elements covered with potting materials, in the frame or frame part.

According to embodiments of the method, radiation from a gas laser such as CO₂-laser may be used to irradiate the substantially transparent or translucent material, e.g. potting material for providing the optical surface along the support zone.

It was found that the use of a CO₂-laser roughens the optical surface over a depth of about 10µm, whereas less to no cutting deeper into the substantially transparent or translucent material, e.g. potting material was noticed. Alternatively a YAG-laser may be used.

The method has the advantage that no additional material is to be applied, i.e. added, onto the optical surface to reduce the reflection of the optical surface at zones, which zones are accurately to be positioned. Hence weather or environmental conditions have few or even no effect on the roughened character of the optical surface, which provided long lasting and substantially constant reflective properties of the potting material.

Also other means may be used to roughen or create matte support zones of the optical surface, such as chimerical etching, mechanical grinding, blasting, scratching, water jet treatment, grinding, brushing, and alike.

According to a second aspect of the present invention, a display panel is provided comprising at least one pixel element for producing or controlling light, the pixel element having a light emitting or reflecting surface. The display panel further comprises a support for supporting the at least one pixel element. The display panel further comprises a substantially transparent material, which can be a potting material, the substantially transparent or translucent material, e.g. potting material, covering the light emitting or reflecting surfaces of the at least one pixel element and at least a part of the support thereby providing the optical surface of the display panel, which optical surface comprises at least one pixel element zone and at least one support zone. A pixel element zone is to be understood as a part of the optical surface bounded by the projection of a light emitting or reflecting surface of a pixel element onto the optical surface in a direction perpendicular to the optical surface. A support zone is to be understood as a part of the optical surface bounded by the projection of the support onto the optical surface in a direction perpendicular to the optical surface. The substantially transparent material, e.g. potting material of the optical surface along the support zone of the optical surface is more rough than the substantially transparent or translucent material of the optical surface along the pixel element zone of the optical surface

According to embodiments of the present invention, the substantially transparent or translucent material of the optical surface along the support zone of the optical surface being more rough than the substantially transparent or translucent material of the optical surface along the pixel element zone of the optical surface may be obtained by polishing the substantially transparent or translucent material of the optical surface along the pixel element zone of the optical surface.

According to embodiments of the present invention, the substantially transparent or translucent material of the optical surface along the support zone of the optical surface being more rough than the substantially transparent or translucent material of the optical surface along the pixel element zone of the optical surface may be obtained by roughening the substantially transparent or translucent material of the optical surface along the support zone of the optical surface.

A display panel according to the second aspect of the present invention has the advantage that, due to the roughened surface provided at the support zones, i.e. at the zones of the optical surface under which no light emitting or reflecting surface of a pixel element is present, the reflectivity of the optical surface is reduced. The zone of the optical surface under which a light emitting or reflecting surface of a pixel element is present, the reflectivity of the optical surface is not changed, hence the optical transmissivity of the substantially transparent or translucent material, e.g. potting material remains unchanged as well. It was found that by roughening the support zones of the optical surface, while leaving the pixel element zones unchanged, the display panel shows less image disturbance and/or loss of image sharpness. It is believed this is due to the reduction of the reflection of high reflectivity of ambient light, e.g. solar light, at its surface. Especially in case images with low intensity or images with small intensity differences between adjacent pixel elements are to be made visible, the roughening of the support zones has the advantage that less image disturbance and/or loss of image sharpness due to the reduced reflection is obtained.

The substantially transparent or translucent materials, e.g. potting materials, preferably having a high optical transmissivity may be used in order to avoid reduction of the light intensity of the emitted light of the pixel element passing through the substantially transparent or translucent material, e.g. potting material, whereas at least partially the disadvantage of high reflectivity of these materials having high optical transmissivity is compensated.

As no additional material is to be added or fixed to the optical surface, but the properties of the substantially transparent or translucent material, e.g. potting material is changed locally at the optical surface, the display panel has a lower risk on loosing its properties over time due to weather conditions and/or environmental conditions. Hence weather or environmental conditions have few or even no effect on the roughened character of the optical surface, which provided long lasting and substantially constant reflective properties of the substantially transparent or translucent material, e.g. potting material.

The display panel may be provided in different dimensions and shapes, having substantial no dimensional restrictions.

The display panel may comprise a multitude of frame parts, each frame part being provided with a support for supporting one but usually more than one pixel element. The pixel elements may be suitable for El, LED, OLED or LCD displays or illumination purposes. The different frame parts may be coupled to each other along one or more coupling elements of the frame.

Alternatively the support may have a substantially rectangular, oval, circular or other geometrical shape, on which a multitude of pixel elements are arranged, possibly according to a pixel element array.

The substantially transparent or translucent material, may be a potting material such as any suitable potting material. Optionally the potting material is a material out of the group of polyurethane polymers, silicone-based materials, epoxy resin and acrylate polymers.

The substantially transparent or translucent material may be a substantially transparent or translucent foil or plate, such as e.g. a substantially transparent or translucent polycarbonate or acrylate foil or plate. The substantially transparent or translucent material may be any suitable material for providing a layer that is substantially transparent or translucent, e.g. by means of hot-melting, spraying lacquering or gluing. Substantially transparent or translucent materials may be substantially transparent or translucent thermo hardening material, polypropylene, polyethylene, polycarbonate, PMMA or other suitable acrylates.

The potting material provides the optical surface of the display panel, which surface can be substantially flat, i.e. having a relatively smooth or even surface. The potting material may be provided at each point of the display panel where it is present in such a way that it has a substantially uniform thickness over the optical surface. In this way the surface of the potting material may not necessarily be substantially flat, but the pixel element zones will extend beyond the support zones.

According to embodiments of the present invention, the substantially transparent or translucent material, e.g. potting material of the optical surface along the support zone of the optical surface may be roughened by providing a regular or irregular surface pattern to the substantially transparent or translucent material, e.g. potting material of the optical surface along the support zone of the optical surface.

According to embodiments of the present invention, the pattern may be a regular pattern.

The advantage of the provision of a regular pattern is that it allows adjusting the reflectivity of the substantially transparent or translucent material, e.g. potting material at the support zones in function of the angle of incidence of the incident ambient light.

According to embodiments of the present invention, the substantially transparent or translucent material, e.g. potting material of the optical surface along the support zone of the optical surface may be roughened by removing a part of the substantially transparent or translucent material, e.g. potting material at the optical surface along the support zone by irradiating the substantially transparent or translucent material, e.g. potting material at the optical surface along the support zone with a laser.

According to embodiments of the present invention, radiation of a gas laser such as a CO₂-laser may be used to irradiate the substantially transparent or translucent material, e.g. potting material at the optical surface along the support zone. It was found that the use of a CO₂-laser roughens the optical surface over a depth of about 10µm, whereas less to no cutting deeper into the substantially transparent or translucent material, e.g. potting material was noticed. Typically a laser printing device is used. When the roughening is provided by means of laser irradiation, typically a number of lines or dots per inch or square inch can be noticed in the pattern, even in irregular patterns.

According to embodiments of the present invention, the at least one pixel element may be at least one LED.

The display panel may comprise additional elements such as a frame or frame parts mount together, on or in which the support and the pixel elements are mounted. If necessary, also additional parts of the display panel, such as sides of the frame holding the support and the pixel elements with the potting material may be roughened by using laser irradiation, providing a uniform roughened surface, possibly patterned, all along the outer surface of the display panel. These frames, or alternatively frame parts mounted together to form a frame, may be provided from polymer, metal such as aluminium or any other suitable material. The frame or frame parts are optionally provided with a dark colour, usually black.

According to embodiments of the present invention, the display panel may be an outdoor display panel. Thus the panel can be environmentally protected, e.g. sealed against ingress of water. According to embodiments of the present invention, the display panel may be part of a power LED panel. According to embodiments of the present invention, the display panel may be part of a signal, such as a traffic signal or traffic lights. According to embodiments of the present invention, the display panel may be part of a lighting apparatus. According to embodiments of the present invention, the display panel may be part of a display.

It is understood that the display may be a flat panel display. However it is understood that such flat panel display does not have to be exactly flat but includes shaped or bent panels. A flat panel display differs from display such as a cathode ray tube in that it comprises a matrix or array of pixel elements, also often referred to as cells or pixels, each producing or controlling light over a small area. There is a relationship between the pixel of an image to be displayed and pixel element of the display. Usually this is a one-to-one relationship. Each pixel element may be addressed and driven separately. It is not considered a limitation on the present invention whether the panel displays, in particular the flat panel displays, are active or passive matrix devices. The array of pixel elements may be in rows and columns but the present invention is not limited thereto but may include any arrangement, e.g. polar or hexagonal.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved displays comprising such display panels according to the second aspect of the present invention. The displays benefit from the reduced reflectivity and show longer life times and can be used substantially independent of the amount and direction of ambient incident light, still allowing to make clear and undisturbed image visible, even in case the images have pixel intensities varying only slightly between adjacent pixels. The displays are also made liquid tight, hence can be used as outdoor displays.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a front view of a display panel according to an embodiment of the present invention.
Fig. 2 is back view of a display panel according to an embodiment of the present invention
Fig. 3, Fig. 4, Fig. 5 and Fig. 6 are side views of a display panel according to an embodiment of the present invention
Fig. 7 is a detail "B" of the optical surface of the display assembly of Fig.
1 to Fig. 6.

Fig. 8 is a schematic representation of a cross section according to a plane AA' of a display panel of Fig. 1 to Fig. 6.

Fig. 9 shows schematically some different patterns, which may be provided to the support zones of the optical surface of the display panel of Fig. 1 to Fig. 6.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are.not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention. The optical surface is to be understood as the surface of the display panel on which an image is created by the light emitted by using the pixel elements. The term "pixel element" is to be understood as the smallest addressable element on a display panel. The pixel element provides the basic unit for composition of an image on such a display panel. The term "substantially transparent or translucent" is to be understood as having the property of being transparent, that is of transmitting light without appreciable scattering so that bodies lying beyond are seen clearly. The term "pixel element" thus may be an element, which produces light to be emitted or which controls light, i.e. a light beam, thereby directing or redirecting the light beam using its light reflective or light transmissive properties. A pixel element may be emissive, reflective or transmissive. The term "light emitting or reflecting surface" of a pixel element is the surface of the pixel element which emits the produced light beam or controlled light beam or modulates the produced light beam. The term "roughening" according to the present invention should be interpreted broadly and includes providing a surface marked by inequalities, protrusions, recesses, ridges, or projections etc. A surface may be roughened by addition or subtraction of material. The term "potting material" means an insulating or protective material used to embed electronic components in a container or on a surface of a supporting structure. The term "optical transmissive" and "optical transmissivity" relates to devices of materials suitable to transmit visible light. The term "polishing" is to be understood as smoothening the surface by any suitable means.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

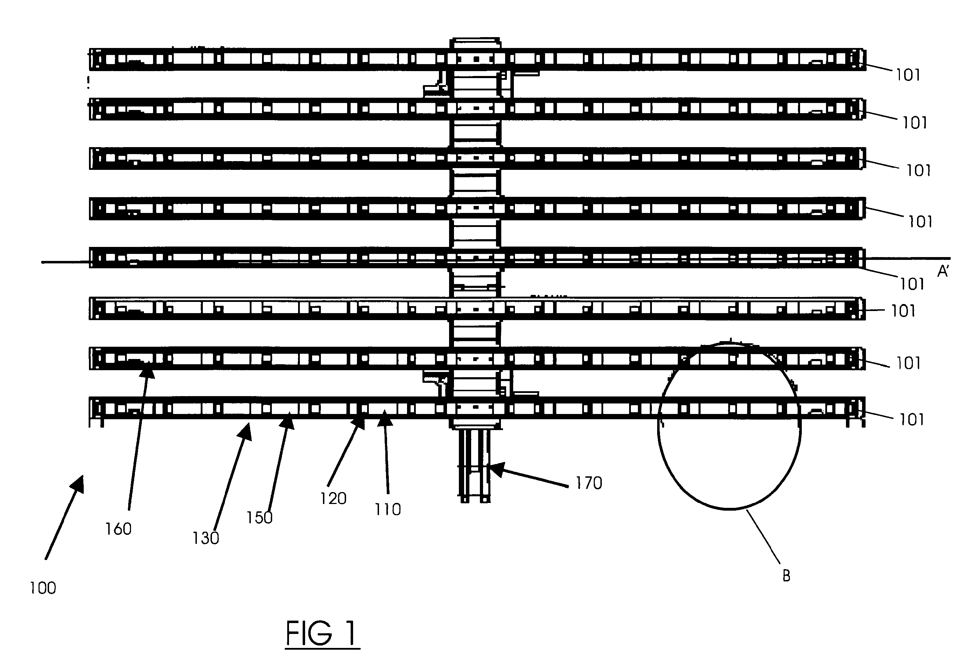

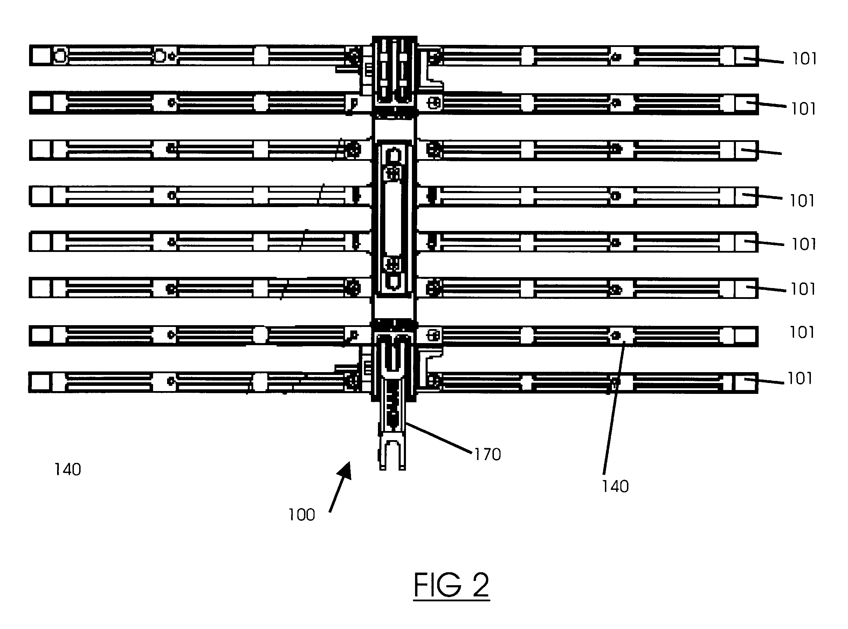

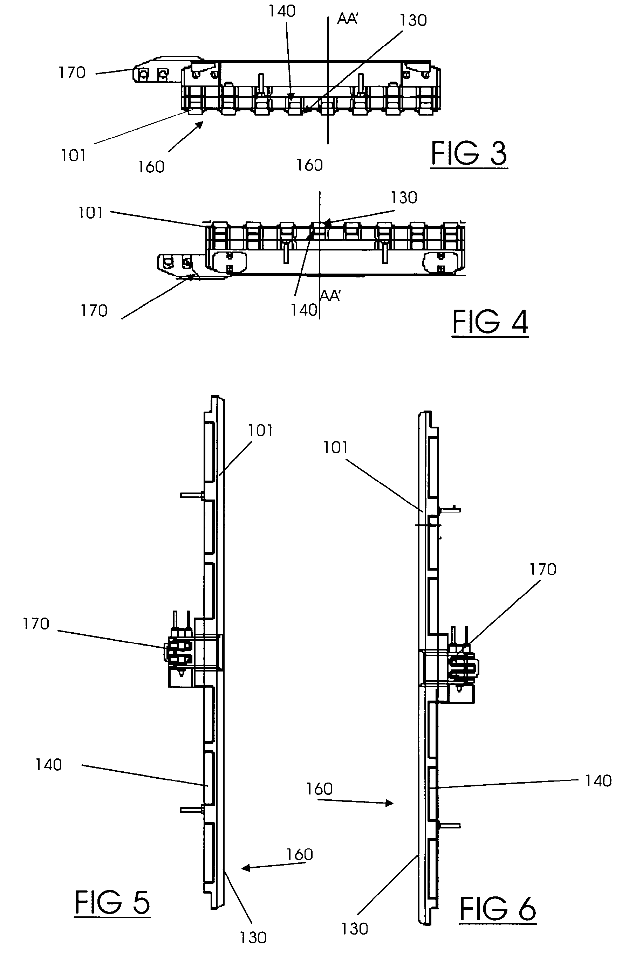

Different side-, top- and bottom views of a display panel 100 are shown in Fig. 1, Fig. 2, Fig. 3, Fig. 4, Fig. 5 and Fig. 6. The display panel can be a fixed format display panel, e.g. an EL, LCD, LED, OLED panel or a plasma display, etc. The same reference signs refer to the same elements.

By way of example, the display assembly 100 may comprise eight supports 110. In the exemplary display assembly 100, on each support, sixteen aligned pixel elements 120 for producing or controlling light, in this particular embodiment being LED's are mounted, the invention not being limited thereto. Each pixel element has a light emitting or reflecting surface 121. The support 110 may be the PCB board to which the pixel elements 120 may be coupled.

Each of the supports 110 on with pixel elements 120 are mounted, may be mounted in a frame part 130. The frame part 130 and the supports 110 with pixel elements 120 may form an elevated collar around the support 110. The volume defined by the frame part 130 and support 110 may be filled with substantially transparent material 150. This material may be a potting material such as substantially transparent or translucent polyurethane. The pixel elements 120 may be embedded and their light emitting or reflecting surface 121 is covered with potting material 150. The optical surface 160 may be provided as a substantially flat surface.

The potting material 150 thus may cover the light emitting or reflecting surfaces 121 of the different pixel elements 120, in the example shown sixteen pixel elements, and the support 110, thereby providing the optical surface 160 of the display panel 100.

It is understood that for the present embodiment shown in Fig. 1 to 6, provided by way of example and the embodiments of the present invention not being limited thereto, the optical surface may be provided as eight areas, one area provided by each of the supports 110. Each support provided an array of 8x1 pixel elements. It is understood that, as an alternative, other numbers of pixels, supports and frames also may be provided, e.g. the pixel elements may be mounted on one support according to an 8x16-array. Also in such alternative embodiments, a frame part encompassing the support and providing an elevated collar around the support may be provided, thereby defining a volume, which is filled with potting material.

At the back side of the supports 110, a second closing part 140 of the frame may be fixed, e.g. by screwing, glueing, nailing, clipping, clicking, etc., to the frame part 130. This fixation can be done in a liquid tight, i.e. watertight, way using appropriate means such as sailings and alike, thereby forming an intermediate part 101 of the display panel 100. The intermediate parts 101, in the present example being eight intermediate parts, may be fixed in liquid tight, i.e. watertight way to a common coupling element 170. As such a display panel 100 may be provided which is suitable for outdoor use, and which can be part of a display. The display on its turn can be part of a larger display assembly.

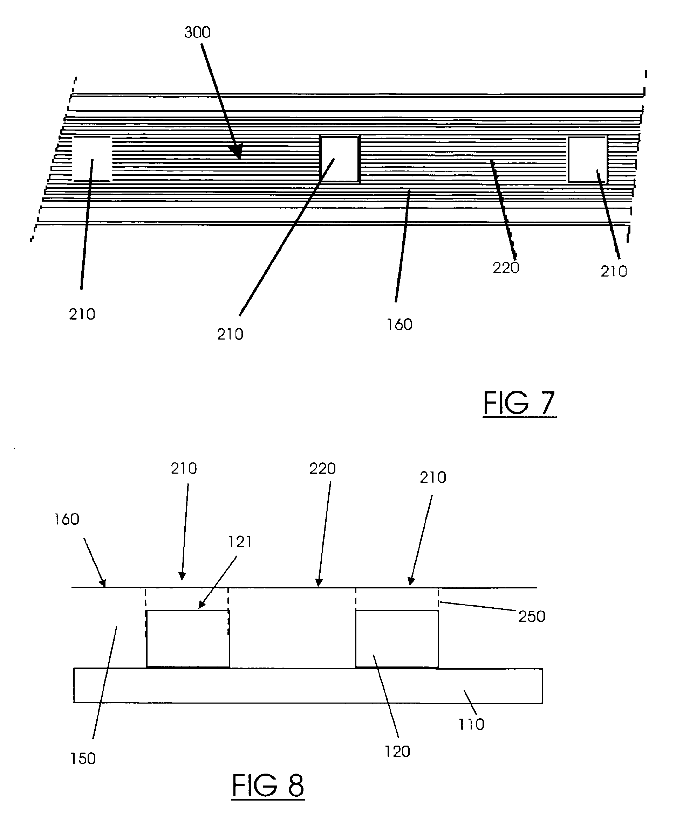

Turning to Fig. 7, which shows a detail "B" of the optical surface 160 of each of the intermediate parts 101 of the display panel 100, the optical surface 160 may comprise a number pixel element zones 210, e.g. eight pixel element zones, of which a number is shown in the detail B. A support zone 220 may encompass the pixel element zones 210. As shown in the cross section according to the plane AA' in Fig. 8, a pixel element zone 210 may be a part of the optical surface 160 bound by the projection of a light emitting or reflecting surface 121 of a pixel element 120 onto the optical surface 160 in a direction 250 perpendicular to the optical surface 160. A support zone 220 is a part of the optical surface 160 bound by the projection of the support 110 onto the optical surface 160 in a direction 250 perpendicular to the optical surface 160.

The substantially transparent or translucent material 150 of the optical surface 160 along the support zone 220 of the optical surface is more rough than the substantially transparent or translucent material 150 of the optical surface 160 along the pixel element zone 210 of the optical surface.

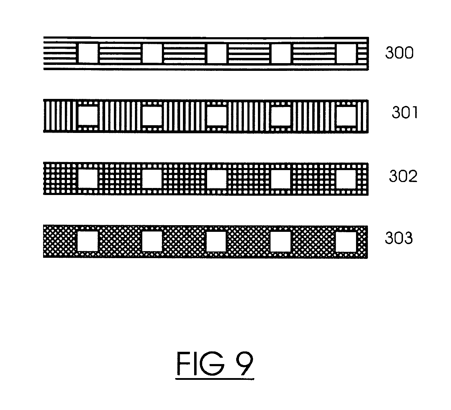

According to this particular embodiment, the potting material 150 of the optical surface 160 along the support zone 220 of the optical surface 160 may be roughened according to a pattern 300. In some embodiments, such a pattern may be a regular pattern, e.g. a regular pattern consisting of substantially parallel lines, which lines are substantially parallel to the direction along which the pixel elements may be aligned. As the roughness of the optical surface 160 along the support zone 220 of the optical surface 160 is modified, there is a difference in roughness between the support zone 220 and the pixel element zone 210, i.e. the optical surface 160 at the support zone is more rough than at the pixel element zone 210. The pattern may be a combination of a number of different patterns. Fig. 9 shows some alternative patterns which are suitable for roughening the optical surface 160 at the support zone 220. Pattern 301 may be a regular pattern consisting of substantially parallel lines. The lines may be substantially perpendicular to the direction along which the different pixel elements, in the present example eight pixel elements, are aligned. Pattern 302 may be a combination, i.e. a superposition, of the patterns 300 and 301. Pattern 302 may comprise two sets of mutually substantially parallel lines, mutually crossing each other and forming a textile-like, woven pattern. Pattern 303 may be a variant of pattern 302, wherein the two sets of mutually substantially parallel lines are inclined over an angle of substantially 90° with regard to the direction along which the pixel elements may be aligned. Another alternative pattern is a random, irregular pattern of elevations and valleys over the support zone 220 of the optical surface160.

According to an alternative, the optical surface 160 along the pixel element zone can be polished in order to provide a difference in roughness of the optical surface between the support zone and the pixel element zone.

Turning to the method according to an other aspect of the present invention, a support 110 on which at least one, and as shown in Fig. 1 to 6 eight pixel elements 120 e.g. LEDs are mounted, are provided. These can for example be fixed, in a frame part 130. The potting material 150 may be provided in the volume defined by the elevated collar around the support 110 provided by the frame part 130 and the support 110. The potting material 150 can be provide in any suitable way. The potting material may be provided as a liquid, which is to be hardened or cured. Optionally a second closing part 140 of the frame may be fixed, e.g. by screwing, glueing, clicking or clipping, to the frame part 130, preferably in a liquid tight way using appropriate closing and/or sealing means. The potting material may define an optical surface of the intermediate part 101. The optical surface may be part of the optical surface 160 of the display panel 100.

In a next step, the roughness of the substantially transparent or translucent material of the optical surface along the support zone of the optical surface and/or along the pixel element zone of the optical surface is modified for rendering the substantially transparent or translucent material of the optical surface along the support zone of the optical surface being more rough than the substantially transparent or translucent material of the optical surface along the pixel element zone of the optical surface.

In this particular embodiment, the zone of the optical surface of the intermediate part 101 may be roughened. The optical surface may be part of the optical surface 160 of the display panel 100. This roughening may be done for example by irradiating the optical surface of the intermediate part 101 with a laser, e.g. a gas laser, preferably a CO₂-laser such as a 30 Watt laser marker. The roughening can be done by providing a regular or irregular pattern to the support zone of the optical surface. Some possible patterns are shown in Fig. 9. Laser methods and equipment for roughening or etching polymeric surfaces are known to the skilled person, e.g. from standard works such as "Lasers in Surface Engineering", ed. N. B. Dahotre, vol.1, ASM International, 1998, especially chapter 8, "Lasers for polymeric coatings" and more especially the section on "Laser induced etching of Polymeric materials". Alternative roughening techniques also may be used, such as for example embossing, carving, scratching, etching, sand blasting, depositing irregularities, covering with structured paint or glue or modifying in any other suitable way.

After roughening of the optical surface of the intermediate parts 101, the eight intermediate parts 101 are fixed in liquid tight, i.e. watertight way to a common coupling element 170. As such a display panel 100 is provided which is suitable for outdoor use, and which can be part of a display, which display on its turn can be part of a larger display assembly.

Alternatively the different intermediate parts 101 may be fixed in a liquid tight, i.e. watertight, way to a common coupling element 170 before they are provided with a roughened support zones at their optical surface. After fixing the intermediate parts to the coupling element, the assembly is subjected to the roughening step, whereby the support zones of the optical surface of the display panel, i.e. the optical zones of each of the eight intermediate parts, is roughened, preferably using a laser such as a CO2-laser as set out above. As such a display panel 100 according to the present invention is provided which is suitable for outdoor use, and which can be part of a display, which display on its turn can be part of a larger display assembly.

Other arrangements for accomplishing the objectives of the the invention will be obvious for those skilled in the art.

It is understood that as such many different display panels for many different purposes, preferably for outdoor use, may be provided. The display panel, e.g. display panel 100, may be part of a power LED panel or may be part of a signal, such as a traffic signal. The display panel 100 may be part of a lighting apparatus or of a display such as a display of a display assembly.

It is to be understood that although preferred embodiments, specific constructions and configurations, as well as materials, have been discussed herein for devices according to the present invention, various changes or modifications in form and detail may be made without departing from the scope and spirit of this invention. Operations may be interchanged among functional blocks. Steps may be added or deleted to methods described within the scope of the present invention.

## Claims

1. A method to provide a display panel (100) having an optical surface, the method comprises the steps of
- providing at least one pixel element (120) for producing or controlling light, the pixel element (120) having a light emitting or reflecting surface (121), the pixel element (120) being mounted on a support;
- covering the light emitting or reflecting surfaces (121) of the at least one pixel element and at least a part of the support with substantially transparent material thereby providing the optical surface of the display panel (100), which optical surface comprise at least one pixel element zone and at least one support zone, wherein a pixel element zone is a part of the optical surface bound by the projection of a light emitting or reflecting surface (121) of a pixel element (120) onto the optical surface in a direction perpendicular to the optical surface and wherein a support zone is a part of the optical surface bound by the projection of the support onto the optical surface in a direction perpendicular to the optical surface;
- modifying the roughness of the substantially transparent material of the optical surface along the support zone of the optical surface and/or modifying the roughness of the substantially transparent material of the optical surface along the pixel element zone of the optical surface, for rendering the substantially transparent material of the optical surface along the support zone of the optical surface being more rough than the substantially transparent material of the optical surface along the pixel element zone of the optical surface.

2. A method according to claim 1, wherein the at least one pixel element (120) is at least one LED.

3. A method according to any one of the claims 1 to 2, wherein the step of modifying the roughness of the substantially transparent material of the optical surface along the support zone of the optical surface and/or modifying the roughness of the substantially transparent material of the optical surface along the pixel element zone of the optical surface comprises the step of roughening of the substantially transparent material of the optical surface along the support zone of the optical surface.

4. A method according to claim 3, wherein the roughening is done by removing a part of the substantially transparent material at the optical surface along the support zone thereby providing a regular or irregular surface pattern at the optical surface along the support zone.

5. A method according to claim 4, wherein the pattern is a regular pattern.

6. A method according to any one of the claims 3 to 5, wherein removing a part of the substantially transparent material at the optical surface along the support zone is done by irradiating the substantially transparent material at the optical surface along the support zone with a laser.

7. A method according to claim 6, wherein radiation of a CO₂-laser is used to irradiate the substantially transparent material at the optical surface along the support zone.

8. A method according to any one of the claims 1 to 7, wherein the substantially transparent material is a potting material selected out of the group of polyurethane polymers, silicone-based materials, epoxy resin and acrylate polymers.

9. A display panel (100) comprising at least one pixel element (120) for producing or controlling light, the pixel element (120) having a light emitting or reflecting surface (121), the display panel (100) further comprising a support for supporting the at least one pixel element (120), the display panel (100) further comprising substantially transparent material, the substantially transparent material covering the light emitting or reflecting surfaces (121) of the at least one pixel element (120) and at least a part of the support thereby providing the optical surface of the display panel (100), which optical surface comprise at least one pixel element zone and at least one support zone, wherein a pixel element zone is a part of the optical surface bound by the projection of a light emitting or reflecting surface (121) of a pixel element (120) onto the optical surface in a direction perpendicular to the optical surface and wherein a support zone is a part of the optical surface bound by the projection of the support onto the optical surface in a direction perpendicular to the optical surface, the substantially transparent material of the optical surface along the support zone of the optical surface being more rough than the substantially transparent material of the optical surface along the pixel element zone of the optical surface.

10. A display panel (100) according to claim 9, wherein the substantially transparent material of the optical surface along the support zone of the optical surface being more rough than the substantially transparent material of the optical surface along the pixel element zone of the optical surface is obtained by roughening the substantially transparent material of the optical surface along the support zone of the optical surface.

11. A display panel (100) according to any one of the claims 9 to 10, wherein the substantially transparent material of the optical surface along the support zone of the optical surface is roughened by providing a regular or irregular surface pattern to the substantially transparent material of the optical surface along the support zone of the optical surface.

12. A display panel (100) according to claim 11, wherein the pattern is a regular pattern.

13. A display panel (100) according to any one of the claims 8 to 12, wherein the substantially transparent material of the optical surface along the support zone of the optical surface is roughened by removing a part of the substantially transparent material at the optical surface along the support zone by irradiating the substantially transparent material at the optical surface along the support zone with a laser.

14. A display panel (100) according to claim 13, wherein radiation of a CO₂-laser is used to irradiate the substantially transparent material at the optical surface along the support zone.

15. A display panel (100) according to claim 9, wherein the substantially transparent material of the optical surface along the support zone of the optical surface being more rough than the substantially transparent material of the optical surface along the pixel element zone of the optical surface is obtained by polishing the substantially transparent material of the optical surface along the pixel element zone of the optical surface.

16. A display panel (100) according to any one of the claims 9 to 15, wherein the at least one pixel element is at least one LED.

17. A display panel (100) according to any one of the claims 9 to 16, wherein the substantially transparent material is a potting material.

18. A display panel (100) according to any one of the claims 9 to 17, wherein the display panel is an outdoor display panel.

19. A display panel (100) according to any one of the claims 9 to 17, wherein the display panel is part of a power LED panel

20. A display panel (100) according to any one of the claims 9 to 17, wherein the display panel is part of a signal, such as a traffic signal or traffic lights.

21. A display panel (100) according to any one of the claims 9 to 17, wherein the display panel is part of a lighting apparatus.

22. A display panel (100) according to any one of the claims 9 to 17, wherein the display panel (100) is part of a display.
